# EUROPÄISCHE PATENTSCHRIFT

(11) **EP 3 565 687 B1**
(45) Veröffentlichungstag und Bekanntmachung des Hinweises auf die Patenterteilung: **09.08.2023**
(21) Anmeldenummer: 17794976.5
(22) Anmeldetag: 09.11.2017
(51) Int. Cl.: B23K 26/16, B23K 26/10, B23K 26/352, B23K 101/06, B23K 26/08

(54) **LASERWERKZEUG MIT FOKUSVERSTELLEINHEIT**
LASER TOOL WITH A FOCUS ADJUSTMENT UNIT
OUTIL LASER COMPRENANT UNE UNITÉ DE RÉGLAGE DU POINT DE FOCALISATION

(30) Priorität: 05.01.2017 DE 102017200081
(43) Veröffentlichungstag der Anmeldung: 13.11.2019
(73) Patentinhaber: Volkswagen Aktiengesellschaft, 38440 Wolfsburg (DE)
(72) Erfinder: WEHRENDT, Christian, 38126 Braunschweig (DE)
(86) Internationale Anmeldenummer: PCT/EP2017/078771
(87) Internationale Veröffentlichungsnummer: WO 2018/127317

(56) Entgegenhaltungen:
- EP-A1- 1 716 963
- DE-A1- 19 809 367
- DE-A1-102007 035 717
- DE-U1-202005 016 574
- JP-A- S5 838 689
- JP-A- 2010 036 240
- KR-A- 20120 126 787
- US-A1- 2010 072 180

## Beschreibung

Die Erfindung betrifft ein Laserwerkzeug, insbesondere für die Strukturierung von Zylinderlaufflächen, mit einer Fokusverstelleinheit, und ein Verfahren zur Einstellung der Fokuslage von Laserstrahlen in einem Laserwerkzeug.

In der Kraftfahrzeugtechnik werden zur Bearbeitung und zur Strukturierung von Werkstoffoberflächen Laserwerkzeuge verwendet. Insbesondere kommen Laserwerkzeuge bei der Einbringung kleiner Strukturen auf Zylinderlaufflächen zum Einsatz. In nach dem Stand der Technik bekannten Laserwerkzeugen wird ein in einer Laserquelle erzeugter Laserstrahl über eine Aneinanderreihung von optischen Elementen auf die Werkstoffoberfläche geführt und dort fokussiert, wobei der Laserstrahl über eine drehbare Vorrichtung rotiert wird.

Ausschlaggebend für ein optimales Bearbeitungsergebnis ist dabei die korrekte Position des Fokus des Laserstrahls, wobei insbesondere die Wiederholgenauigkeit der Fokuseinstellung von großer Bedeutung ist. Die korrekte Fokuslage wird bisher in der Regel manuell eingestellt und ist im laufenden Prozess nicht anpassbar. Die manuelle Anpassung erfolgt dabei über an den optischen Elementen befindlichen Schrauben, durch welche das optische Element an verschiedenen Positionen im Strahlengang einklemmbar ist.

Das manuelle Einklemmen des optischen Elementes mittels Schrauben birgt die Gefahr, dass das optische Element schräg im Strahlengang verschraubt wird, wodurch sich in Folge der Strahlenverlauf, insbesondere die Fokuslage, verändert. Zudem ist bei diesem Vorgehen keine hohe Wiederholgenauigkeit gewährleistet, wenn Laserwerkzeug auf den gleichen Zylinderdurchmesser eingestellt werden soll. Insbesondere erlaubt es dieses Vorgehen nicht, das Laserwerkzeug im laufenden Prozess auf andere Zylinderdurchmesser einzustellen oder auf Veränderungen der Fokuslage zu reagieren.

Aus der DE 10 2008 015 403 A1 ist ein Laserstrahlwerkzeug zum Feinbearbeiten einer Innenoberfläche einer Werkstückbohrung, insbesondere einer Zylinderlauffläche, bekannt, wobei das Laserstrahlwerkzeug an einer rotierbaren und insbesondere heb- und senkbaren hohlen Maschinenspindel angebracht ist, und wobei eine Optikeinrichtung zum Umlenken des Laserstrahls auf der Werkstückoberfläche relativ zur Maschinenspindel verstellbar ist, sodass der Laserstrahl unabhängig von der Bewegung der Maschinenspindel bewegbar ist. Dabei ist insbesondere vorgesehen, dass mit Hilfe der Verstelleinrichtung eine der Rotationsbewegungen der Maschinenspindel entgegengesetzte Rotationsbewegung der Optikeinrichtung zum Umlenken des Laserstrahls auf die Werkstückoberfläche überlagert werden kann. Dadurch sollen Wechselwirkungszeiten zwischen dem Laserstrahl und der zu bearbeitenden Werkstoffoberfläche verlängert werden, so dass das Einbringen von freien Strukturen ermöglicht wird.

Aus der DE 19 809 367 A1, welche die Grundlage für den Oberbegriff der Ansprüche 1 und 16 bildet, ist ferner ein Präzisionsbearbeitungsverfahren bekannt, bei welchem ein Strahl, z.B. ein Laser zur diskontinuierlichen Bearbeitung der Werkstückoberfläche verwendet wird, um einzelne Aussparungen in dieser Oberfläche an unregelmäßig beabstandeten Punkten während der Drehung des bearbeiteten Werkstücks um seine Längsachse auszubilden.

Die EP 1 716 963 A1 betrifft eine Vorrichtung und ein Verfahren zur Remote-Laser-Materialbearbeitung. Erfindungsgemäß ist danach eine Vorrichtung zur Remote-Laser-Materialbearbeitung vorgesehen, bestehend aus einem Kollimator mit der Brennweite fK, welcher den aus einer Lichtleitfaser austretenden Laserstrahl kollimiert, einem Ablenksystem mit mindestens einem drehbar gelagerten Spiegel sowie einem Antrieb für die Winkelverstellung des Spiegels, und einem Fokussierobjektiv mit der Brennweite fO, welches den kollimierten und vom Spiegelsystem abgelenkten Laserstrahl fokussiert.

Die DE 20 2005 016574 U1 betrifft eine Blasvorrichtung mit schräg zur Achse eines Laserstrahls ausgerichteten Düsen, die Gasströme entlang eines tangentialen Rings ausstoßen. Der Ring ist in einem axialen Abstand von einer Strahlaustrittsstelle eines Laserwerkzeugs angeordnet. Dieser Abstand ist kleiner als der Arbeitsabstand.

Die KR 2012 0126787 A betrifft eine hybride Laserbearbeitungsvorrichtung, die ein vibrierendes Element verwendet, um die Bearbeitungstiefe eines Werkstücks entsprechend dem Vibrationsbereich eines vibrierenden Elements eines optischen Systems zu steuern. Eine hybride Laserbearbeitungsvorrichtung umfasst eine Laserquelle, einen Strahlenteiler, eine Objektivlinse, einen Tisch und ein Vibrationselement. Die Laserquelle erzeugt Ultrakurzpuls-Laserstrahlen. Der Strahlenteiler teilt die von der Laserquelle erzeugten Laserstrahlen und überträgt die geteilten Strahlen auf ein Werkstück. Die Objektivlinse bündelt die vom Strahlenteiler übertragenen Strahlen auf einen Zielbereich des Werkstücks. Der Tisch, auf dem das Werkstück platziert ist, kann über eine Steuereinheit in x-, y- und z-Richtung bewegt werden. Das Vibrationselement ist mit der Objektivlinse verbunden und wird von der Steuereinheit gesteuert, um die Objektivlinse in Vibration zu versetzen.

Die JP S 58 38689 A beschreibt ein genaues Schneiden einer zu bearbeitenden dicken Substanz durch Bereitstellen eines Mittels zum periodischen Variieren einer Fokusbildungsposition eines Laserstrahls in seiner optischen Achsenrichtung zwischen einer optischen Faser zum Übertragen eines Ausgangs eines Laserstrahls eines Laseroszillators und der zu bearbeitenden Substanz.

Die JP 2010 036240 A betrifft einen Laserstrahlbearbeitungskopf mit einem Faseranschluss, in dem der Laserstrahl durch ein optisches Faserkabel geführt wird. Ferner sind eine Kollimatorlinse, die den vom Faseranschluss in gestreutem Zustand emittierten Laserstrahl parallelisiert, und eine Kondensorlinse vorgesehen, die das durch die Kollimatorlinse geleitete Licht konvergiert. Das Werkstück wird mit dem durch die Sammellinse konvergierten Strahl bestrahlt, um ein Bild zu erzeugen. Die Kollimatorlinse ist in einem Kollimatorlinsengehäuse untergebracht, das in der Bestrahlungsrichtung des Laserstrahls innerhalb des Laserstrahl-Bearbeitungskopfes frei beweglich ist. Das Kollimatorlinsengehäuse ist mit einem Ultraschallschwingungskörper verbunden, der entlang der Laserstrahlabstrahlungsrichtung schwingt. Durch die Vibration dieser Kollimatorlinse vibriert die Fokusposition des Laserstrahls mit einer Amplitude entlang der optischen Achsenrichtung des Laserstrahls.

Die DE 10 2007 035717 A1 betrifft eine Laserstrahlschweißvorrichtung und ein Laserstrahlschweißverfahren. Es ist vorgesehen, dass ein Laserstrahl mit ringförmiger Querschnittsfläche zum Erzeugen einer Radialschweißnaht umgelenkt wird.

Die US 2010 / 072180 A1 betrifft ein modulares Laserbearbeitungssystem zur Bearbeitung eines Werkstücks mittels eines Bearbeitungslaserstrahls, das eine Vielzahl von Funktionsmodulen mit einem Strahldurchgangsbereich aufweist, die entlang eines Bearbeitungslaserstrahlengangs aneinanderreihbar sind, umfassend ein als Faseranschlussmodul ausgebildetes Funktionsmodul, das zur Aufnahme eines Faserendes dient, aus dem der Bearbeitungslaserstrahl austritt, und ein als Kollimatormodul ausgebildetes Funktionsmodul mit einer Kollimatorlinse, die den Bearbeitungslaserstrahl kollimiert, wobei die Kollimatorlinse aus einer Gruppe von Kollimatorlinsen mit unterschiedlichen Brennweiten, die einem Rastermaß (L1) oder einem ganzzahligen Vielfachen davon entsprechen, ausgewählt ist, wobei die Länge des Strahldurchgangsbereichs eines Funktionsmoduls entlang des Bearbeitungslaserstrahlengangs dem Rastermaß oder einem ganzzahligen Vielfachen davon entspricht.

Der Erfindung liegt die Aufgabe zugrunde, ein Laserwerkzeug bereitzustellen, welches die Möglichkeit bietet, die Fokuslage des Laserstrahls prozesssicher und mit einer hohen Wiederholgenauigkeit zu verstellen. Diese Aufgabe wird durch die Vorrichtung mit den in Anspruch 1 und das Verfahren mit den in Anspruch 16 angegebenen Merkmalen gelöst.

Die Erfindung sieht ein Laserwerkzeug, insbesondere für die Strukturierung von Zylinderlaufflächen vor, welches eine Laserquelle zur Erzeugung von Laserstrahlen aufweist und einen Kollimator, welcher einen parallelen Verlauf der Laserstrahlen aus der Laserquelle erzeugt. Weiterhin verfügt das Laserwerkzeug über eine Linse, welche innerhalb einer rotierbaren Spindel angeordnet ist. Die parallel verlaufenden Laserstrahlen aus dem Kollimator werden durch diese Linse geführt und anschließend über eine optische Vorrichtung, welche an dem der Laserquelle abgewandten Ende der Spindel befestigt ist, auf die Werkstoffoberfläche umgelenkt. Dabei ist der Kollimator mittels eines Antriebs parallel zum Laserstrahl bewegbar.

Durch die Bewegung des Kollimators mit Hilfe eines Antriebs entlang der Richtung des Laserstrahls ist es auf vorteilhafte Weise möglich, die Lage des Fokus des Laserstrahls anzupassen, ohne dass der manuelle Einfluss eines Bedieners nötig ist. Zudem wird der Kollimator stabil im Strahlengang geführt.

Erfindungsgemäß ist ferner ist vorgesehen, dass das Laserwerkzeug eine Zentriereinrichtung zur Verschiebung des Kollimators in einer Ebene senkrecht zum Laserstrahl aufweist. Mittels der Zentriereinrichtung kann der Kollimator in X- und Y-Richtung verstellt werden, wobei die X-Richtung und die Y-Richtung eine Ebene senkrecht zum Laserstrahl, welcher in Z-Richtung verläuft, aufspannen. Die Zentriereinrichtung dient dazu, Fertigungstoleranzen des Kollimators und eine ungewollte parallele Verschiebung des Kollimators zur Linse nach einem Wechsel des Kollimators auszugleichen. Nach dem ersten Einbau des Kollimators oder aber auch nach einem Wechsel kann das Problem auftreten, dass der Kollimator sich nicht mehr zentrisch zur Brennpunktachse zur Linse befindet. Dadurch wird der Laserstrahl nicht optimal fokussiert. Eine solche Verschiebung in der XY-Ebene kann vorteilhaft nach dem Einbau oder Wechsel des Kollimators mittels der Zentriereinrichtung ausgeglichen werden.

Dazu weist die Zentriereinrichtung mindestens zwei Zentrierschrauben auf, wobei eine erste Zentrierschraube entlang der X-Richtung und eine zweite Schraube entlang der Y-Richtung angeordnet sind. Durch ein Anziehen der Zentrierschrauben wird der Kollimator in X- bzw. Y-Richtung bewegt. Insbesondere findet durch das Anziehen der Zentrierschrauben eine Bewegung der mit dem Kollimator verbundenen Zentriereinrichtung statt. Es kann ferner eine dritte Zentrierschraube vorgesehen sein, mittels welcher der Kollimator in entlang einer um 45° gedreht zur ersten und zweiten Zentrierschraube angeordneten Richtung verschoben werden kann.

Zweckmäßige Ausgestaltungen der Erfindung sind in den Unteransprüchen gekennzeichnet.

Gemäß einer zweckmäßigen Weiterbildung ist der Antrieb ein elektrischer Antrieb, pneumatischer Antrieb oder ein hydraulischer Antrieb. Besonders bevorzugt ist der Antrieb ein Stellmotor.

Gemäß einer vorteilhaften Ausführung verfügt der Antrieb über ein Längenmesssystem als externem Positionsgeber zur Erfassung der Position des Kollimators. Die Bewegung des Kollimators parallel zur Richtung des Laserstrahls kann beispielsweise über einen Kugelgewindetrieb erfolgen. Das Längenmesssystem ist mit dem Antrieb verbunden oder in den Antrieb integriert.

Gemäß einer weiteren vorteilhaften Ausführung weist der Antrieb eine Steuervorrichtung zur Steuerung der Bewegung des Kollimators auf. Anhand mindestens eines vorgebbaren Parameters kann die Bewegung des Kollimators somit gesteuert werden. Die Steuervorrichtung verarbeitet darüber hinaus die Signale des Längenmesssystems.

Dadurch, dass die Bewegung des Kollimators durch vorgebbare Parameter gesteuert wird, erhöht sich die Prozesssicherheit und die Wiederholgenauigkeit auf vorteilhafte Weise. Darüber hinaus lässt sich die Fokuslage besonders präzise für unterschiedliche Zylinderdurchmesser einstellen. Es ist insbesondere möglich, die Parameter für unterschiedliche Zylinderdurchmesser in einem in der Steuerung vorgesehenen Speicher zu hinterlegen, sodass diese direkt während des Betriebs ohne manuelles Umrüsten abgerufen werden können.

Gemäß einer weiteren Ausführungsform kann der mindestens eine Parameter der Vorschub des Kollimators in Richtung der optischen Vorrichtung oder der Vorschub des Kollimators in Richtung der Laserquelle sein. Dabei bedeutet ein Vorschub des Kollimators in Richtung der optischen Vorrichtung ein Vorrücken des Fokus in Richtung der Werkstoffoberfläche und analog bedeutet ein Vorschub des Kollimators in Richtung der Laserquelle ein Abrücken des Fokus von der Werkstückoberfläche.

Gemäß einer weiteren vorteilhaften Ausgestaltung ist vorgesehen, dass das Laserwerkzeug mindestens einen unteren Anschlag aufweist, der die Bewegung des Kollimators in Richtung der optischen Vorrichtung begrenzt. Zudem ist gemäß einer weiteren Ausführung vorgesehen, dass das Laserwerkzeug mindestens einen oberen Anschlag aufweist, der die Bewegung des Kollimators in Richtung der Laserquelle begrenzt.

Gemäß einer weiteren Ausgestaltung ist vorgesehen, dass die Linse feststehend in einem Linsenrohr angeordnet ist. Durch die feststehende Anordnung der Linse im Linsenrohr bleibt diese während des Bearbeitungsprozesses relativ zur Rotation der Spindel starr, da sie nicht mit dieser verbunden ist. Dadurch, dass die Linse nicht mit der Spindel rotiert, sondern starr im Linsenrohr angeordnet ist, erhöht sich die Stabilität im optischen Pfad und damit auch die Fokuslage des Laserstrahls.

Gemäß einer weiteren vorteilhaften Ausgestaltung ist die Linse an dem Linsenrohr befestigt, wobei das Linsenrohr am Kollimator befestigt wird. Damit bilden die Linse, das Linsenrohr und der Kollimator eine Einheit, die mittels des Antriebs parallel zum Laserstrahl bewegt werden kann und somit zur Einstellung der Fokuslage des Laserstrahls dient. Dadurch, dass in dieser Anordnung der Kollimator und die Linse fest zueinander angeordnet sind, wird die Laserstrahlführung optimiert und eine genauere Positionierung des Laserfokus ermöglicht.

Weiterhin ist gemäß einer vorteilhaften Ausführungsform vorgesehen, dass die Spindel mittels eines Hohlwellenmotors rotiert wird, wobei die Spindel am Rotor des Hohlwellenmotors befestigt ist.

Gemäß einer weiteren vorteilhaften Ausgestaltung ist die optische Vorrichtung ein Umlenkprisma oder ein Spiegel. Dieses ist an einem der Laserquelle abgewandten Ende der Spindel befestigt und rotiert somit mit der Spindel, um durch die Rotation die Werkstoffoberfläche abzufahren. Das Umlenkprisma oder der Spiegel ist in einem Halter, welcher mit der Spindel verbunden ist, mittels mehrerer Schrauben verschraubt. Es sind jedoch auch andere optische Elemente, welche zur Umlenkung eines Laserstrahls ausgebildet sind, denkbar, beispielweise ein Spiegel oder Prisma.

Des Weiteren ist gemäß einer zweckmäßigen Ausgestaltung vorgesehen, dass das Laserwerkzeug eine Regelungseinheit aufweist, welche die Bewegung des Kollimators in Abhängigkeit von einem Signal eines Sensors im Prozess regelt. Ein solcher Sensor könnte beispielsweise die Intensität des Laserspots messen und mit einem Sollwert oder einem Schwellenwert vergleichen. Bei Überschreiten oder Unterschreiten eines solchen Sollwerts oder Schwellenwerts regelt der Antrieb automatisch die Position des Kollimators und damit die Lage des Laserstrahlfokus nach. Dies hat zur Folge, dass die Oberfläche eine bessere Oberflächenstruktur gemäß der vorgewählten Parameter aufweist. Zudem steigt die Wirtschaftlichkeit des Systems, da die Intensität der Laserquelle den Umgebungseinflüssen angepasst werden kann und das System fortlaufend kalibriert wird.

Darüber hinaus betrifft die Erfindung ein Verfahren zur Einstellung der Fokuslage von Laserstrahlen in einem Laserwerkzeug gemäß der vorliegenden Erfindung. Das Laserwerkzeug weist eine Laserquelle zur Erzeugung der Laserstrahlen und einen Kollimator zur Erzeugung eines parallelen Strahlverlaufs der Laserstrahlen auf. Der Laserstrahl wird durch eine Linse geführt, wobei die Linse innerhalb einer rotierbaren Spindel angeordnet ist. Anschließend wird der Laserstrahl durch eine optische Vorrichtung geführt, welches sich an einem der Laserquelle abgewandten Ende der Spindel befindet und die Laserstrahlen auf eine Werkstoffoberfläche umlenkt. Der Kollimator ist mittels eines Antriebs parallel zum Laserstrahl bewegbar und mittels einer Steuerung, welche die Bewegung des Kollimators steuert, wird mindestens ein Parameter vorgegeben, wobei in Abhängigkeit von dem mindestens einen Parameter der Kollimator in Richtung der optischen Vorrichtung oder entgegen der Richtung der optischen Vorrichtung bewegt wird.

Gemäß einer vorteilhaften Ausgestaltung des Verfahrens ist der mindestens eine Parameter der Vorschub des Kollimators in Richtung der optischen Vorrichtung oder der Vorschub des Kollimators in Richtung der Laserquelle.

Weiterhin ist vorgesehen, dass das Laserwerkzeug weiterhin eine Kippeinrichtung aufweist, mittels derer der Kollimator kippbar ist. Erfindungsgemäß ist der Kollimator von mindestens einer Ebene, welche einen Winkel α mit der X-Y-Ebene einschließt, in die X-Y-Ebene kippbar. Die Kippeinrichtung dient auch dazu, Fertigungstoleranzen des Kollimators und eine ungewollte Winkelverschiebung des Kollimators zur Linse nach einem Wechsel des Kollimators auszugleichen.

Nach dem ersten Einbau des Kollimators oder aber auch nach einem Wechsel kann das Problem auftreten, dass der Kollimator sich in Schräglage zur Linse befindet. Dadurch wird der Laserstrahl nicht optimal fokussiert. Eine solche Schräglage kann vorteilhaft nach dem Einbau oder Wechsel des Kollimators mittels der Kippausrichtung ausgeglichen werden.

Die Kippeinrichtung weist ein halbkugelförmiges Element auf, welches mit seiner flachen Seite am Kollimator befestigt ist. Das halbkugelförmige Element weist weiterhin einen umlaufenden ringförmigen Vorsprung auf, durch welchen Kippschrauben geführt sind. Das halbkugelförmige Element ist auf der dem Kollimator abgewandten Seite in die zentrale Öffnung eines ringförmigen Auflageteils eingelegt, wobei die an dem halbkugelförmigen Element bzw. an dem ringförmigen Vorsprung angeordneten Kippschrauben an dem ringförmigen Auflageelement verschraubt sind und so das halbkugelförmige Element an dem ringförmigen Auflageteil befestigen. Das halbkugelförmige Element weist zudem eine zentrale Durchgangsöffnung auf, durch welche der Laserstrahl geführt wird. Nach dem Durchtritt durch die Durchgangsöffnung passiert der Laserstrahl die zentrale Öffnung des ringförmigen Auflageteils.

Durch die Lagerung des halbkugelförmigen Elementes in dem ringförmigen Auflageteil kann durch Anziehen und Lösen der Schrauben eine Lageveränderung des Kollimators bezüglich des Laserstrahls und der Linse erreicht werden. Insbesondere kann der Kollimator aus einer Schräglage um einen Winkel α in die XY-Ebene gekippt werden.

Vorzugsweise sind zum Kippen des Kollimators drei Kippschrauben, vorzugsweise Feingewindeschrauben, vorgesehen, welche gleichmäßig entlang der Umfangsfläche des ringförmigen Vorsprungs der Kippreinrichtung angeordnet sind. Durch das Anziehen einer der Kippschrauben wird der Kollimator in Richtung der jeweiligen Kippschraube gekippt, da sich das halbkugelförmige Bauteil kugelgelenkartig in dem ringförmiges Auflageelement bewegt. Wurde ein Kollimator beispielsweise bei einem Wechsel schräg in den Strahlengang eingebaut, das heißt um einen Winkel α zur XY-Ebene gekippt, kann die Lage des Kollimators durch Anziehen der Kippschrauben so lange verändert werden, bis sich der Kollimator wieder innerhalb der XY-Ebene befindet.

Vorteilhaft können Distanzscheiben mit einer definierten Dicke vorgesehen sein, welche zwischen dem umlaufenden ringartigen Vorsprung und dem ringförmigen Auflageteil um die Schraubengewinde eingelegt werden, um eine definierte und reproduzierbare Einschraubtiefe umsetzen zu können. Mit Hilfe der Kippeinrichtung ist es vorteilhaft möglich, die Lage des Kollimators zu jedem Zeitpunkt nachjustieren zu können, um jederzeit sicherstellen zu können, dass der Laserstrahl optimal auf die Linse trifft.

Vorzugsweise umfasst die Zentriereinrichtung zwei plattenartige Bauteile, wobei das erste plattenartige Bauteil an der Hülse befestigt ist und das zweite plattenartige Bauteil an dem Kollimator befestigt ist. Zum Zentrieren des Kollimators sind diese beiden plattenartigen Bauteile gegeneinander verschiebbar. Dazu verlaufen die Zentrierschrauben durch Bohrungen im ersten plattenartigen Bauteil, und bei Anziehen bzw. Lösen der Zentrierschrauben erfolgt eine Verschiebung des zweiten plattenartigen Bauteils und damit des Kollimators entlang der Längsrichtung der jeweiligen Schraube. Die Längsrichtung der Zentrierschrauben entspricht dabei der X-oder Y-Richtung oder einer Richtung 45° dazu.

Um den Kollimator um eine gewünschte, vorbestimmte Distanz verschieben zu können, können Distanzscheiben vorgesehen sein, welche zwischen die jeweilige Schraube und das erste bzw. zweite plattenartige Bauteil eingelegt werden. Ein Anziehen der Schrauben ist dann bis zum Anschlag des ersten bzw. zweiten plattenartigen Bauteils an die Distanzscheiben möglich.

Um die Verschiebung des ersten plattenartigen Bauteils mit dem zweiten plattenartigen Bauteil nur während der Justierung des Laserwerkzeugs zu ermöglichen und ansonsten, insbesondere während des Betriebs des Laserwerkzeugs, eine feste Verbindung der beiden plattenartigen Bauteile herzustellen, sind das erste und das zweite plattenartige Bauteil mittels wenigstens einer Arretierschraube verschiebefest miteinander verbindbar. Die wenigstens eine Arretierschraube verläuft dabei vorzugsweise durch eine Durchgangsbohrung in dem ersten plattenförmigen Bauteil und wird zum Arretieren in das zweite plattenartige Bauteil verschraubt.

Mittels der Zentriereinrichtung ist es also möglich, den mit der Zentriereinheit verbundenen Kollimator so zu verstellen, dass der durch den Kollimator geführte Laserstrahl optimal auf die Linse trifft. Dadurch wird der Laserstrahl präzise im Strahlengang geführt, was die Qualität der Werkstückbearbeitung vorteilhaft erhöht.

Erfindungsgemäß ist vorgesehen, dass die Kippeinrichtung zwischen der der optischen Vorrichtung zugewandten Seite des Kollimators und der Zentriereinrichtung angeordnet ist.

Gemäß einer weiteren zweckmäßigen Ausgestaltung ist vorgesehen, dass das Laserwerkzeug ein erstes Düsensystem aufweist, wobei das erste Düsensystem wenigstens eine Luftdüse, insbesondere wenigstens zwei Luftdüsen, aufweist. Mittels der wenigstens einen Luftdüse wird der aus dem Laserwerkzeug austretende Laserstrahl derart mit einem Luftstrom umgeben, dass mittels des Laserstrahls von der Werkstückoberfläche abgetragene Werkstückpartikel entschleunigt werden und/oder dass der Luftstrahl der wenigstens einen Luftdüse auf die Werkstoffoberfläche gerichtet ist, um die Werkstoffoberfläche zu reinigen.

Durch die Reinigung der Werkstoffoberfläche vor Auftreffen des Laserstrahls kann das Bearbeitungsergebnis vorteilhaft verbessert werden.

Das erste Düsensystem umfasst eine erste Luftdüse und eine zweite Luftdüse, welche an sich gegenüberliegenden Seiten der Austrittsöffnung des Laserstrahls am Laserwerkzeug angeordnet sind. Dadurch ist vorteilhaft eine Vor- und/oder Nachreinigung der Werkstückoberfläche möglich. Aus der ersten Luftdüse und der zweiten Luftdüse tritt jeweils ein Luftstrahl aus, welcher jeweils kegelförmig ausgebildet ist und auf die Werkstoffoberfläche gerichtet ist. Somit bilden die beiden Luftstrahlen zumindest bereichsweise einen Luftvorhang um den Laserstrahl, welcher verhindert, dass stark beschleunigte Werkstückpartikel in die Umgebung des Laserwerkzeugs abgegeben werden. Dies wird dadurch erreicht, dass die Werkstückpartikel auf den Luftstrahl treffen, von diesem mitgerissen werden und durch die Richtungsänderung entschleunigt werden.

Neben der ersten Luftdüse und der zweiten Luftdüse können vorteilhaft auch weitere Luftdüsen vorgesehen sein, welche um die Austrittsöffnung des Laserstrahls herum angeordnet sind, um so den Luftvorhang zu vergrößern und/oder zu verdichten.

Gemäß einer weiteren zweckmäßigen Ausgestaltung ist vorgesehen, dass das Laserwerkzeug ein zweites Düsensystem aufweist, wobei das zweite Düsensystem wenigstens eine dritte Luftdüse aufweist, dessen Luftstrahl den Laserstrahl derart von einer Laserstrahlaustrittsöffnung des Laserwerkzeugs verläuft, dass ein Eindringen von Partikeln in das Innere des Laserwerkzeugs durch die Laserstrahlaustrittsöffnung verhindert wird. Die dritte Luftdüse ist vorteilhaft derart angeordnet, dass der aus ihr heraustretende Luftstrahl den Laserstrahl kreuzt. Um besonders wirksam das Eindringen von Partikeln in das Innere des Laserwerkzeugs zu verhindern, ist die dritte Luftdüse vorteilhaft nah an der Laserstrahlaustrittsöffnung angeordnet und schließt einen großen Winkel mit dem Laserstrahl ein. Dadurch bildet sich nah an der Laserstrahlaustrittsöffnung ein Luftvorhang. Bewegt sich nun ein Partikel, insbesondere ein abgetragener Werkstückpartikel, in Richtung der Laserstrahlaustrittsöffnung, wird dieser durch den Luftstrahl im Wesentlichen quer zur Laserstrahlrichtung abgelenkt. Dadurch kann vorteilhaft eine Verunreinigung des Inneren des Laserwerkzeugs, insbesondere der optischen Einrichtung verhindert werden.

Gemäß einer weiteren zweckmäßigen Ausgestaltung ist vorgesehen, dass das Laserwerkzeug eine Schwingungserzeugungseinrichtung aufweist, mittels welcher die Linse in eine Schwingung parallel zum Laserstrahl versetzbar ist, wobei die Schwingungsfrequenz in Abhängigkeit von der Umlaufgeschwindigkeit der Spindel steuerbar ist. Durch die Schwingung der Linse parallel zum Laserstrahl, also in Z-Richtung, verschiebt sich mit der Bewegung der Linse auch die Lage des Fokus des Laserstrahls auf bzw. nahe der Werkstückoberfläche. Während der Rotation des Laserwerkzeugs können auf diese Weise feine Strukturen auf der Werkstückoberfläche erzeugt werden. Insbesondere sind derart periodisch auftretende Vertiefungen in der Werkstückoberfläche realisierbar, wobei eine jede Vertiefung einem Schwingungsmaximum der Linse entspricht. Der Abstand zweier Vertiefungen wird durch die Rotationsgeschwindigkeit des Laserwerkzeuges bestimmt. Zudem ist es durch rotationsgeführte Fokusverstellung mittels Frequenzen möglich, mittels der Rotationsgeschwindigkeit und der Frequenz der erzeugten Schwingung die Abstände der erzeugten Strukturen qualifiziert zu bestimmen.

Durch die Einarbeitung feiner Strukturen in die Werkstückoberfläche können deren Eigenschaften, insbesondere deren Haftung mit anderen Werkstoffen, vorteilhaft verbessert werden. Besonders vorteilhaft ist dies beispielsweise bei der Bearbeitung der Innenflächen von Zylinderkurbelgehäusen, wenn diese mit einer Beschichtung versehen werden.

Gemäß einer vorteilhaften Ausgestaltung ist vorgesehen, dass die Schwingungserzeugungseinrichtung einen Magneten und eine Spule umfasst, wobei die Linse mittels des Magneten und der Spule in Schwingung versetzt wird. Die Spule ist mit der Linse verbunden und ist im Feld des Magneten angeordnet. Analog zur Schwingungsanregung einer Membran in einem Lautsprecher wird durch den Stromfluss durch die Spule aufgrund der Lorentzkraft eine Bewegung der Spule und der an der Spule angeordneten Linse in Z-Richtung erreicht. Auf diese Weise kann eine periodische Bewegung der Linse und damit des Fokus in Z-Richtung erreicht werden, um, wie oben bereits ausgeführt, entlang der Rotationslinie des Laserwerkzeugs Strukturen in die Werkstückoberfläche einzuarbeiten.

Alternativ ist vorgesehen, dass die Schwingungserzeugungseinrichtung einen hochfrequenten Motor und einen Exzenter aufweist, wobei der Motor den Exzenter antreibt. Der Exzenter ist mit der Linse derart verbunden, dass die Linse in eine Schwingung in Z-Richtung versetzt wird.

Weiterhin ist gemäß einer vorteilhaften Ausgestaltung des Verfahrens vorgesehen, dass die Linse feststehend in einem Linsenrohr angeordnet ist, welches am Kollimator befestigt ist, sodass die Linse der Bewegung des Kollimators folgt.

Ein Ausführungsbeispiel der Erfindung wird nachstehend anhand der Zeichnungen näher erläutert. Es zeigen
- Figur 1: eine Querschnittsdarstellung des Laserwerkzeuges,
- Figur 2: eine Explosionsdarstellung der zwischen Kollimator und Hülse angeordneten Kippeinrichtung und Zentriereinrichtung,
- Figur 3: eine Seitenansicht des ersten Düsensystems und des zweiten Düsensystems,
- Figur 4: eine Querschnittsansicht senkrecht zum Laserstrahl der Schwingungserzeugungseinrichtung,
- Figur 5: eine Ansicht des Kollimators mit daran angeordneter Kippeinrichtung und Zentriereinrichtung von schräg oben,
- Figur 6: eine Seitenansicht des Kollimators mit daran angeordneter Kippeinrichtung und Zentriereinrichtung, und
- Figur 7: eine Draufsicht auf den Kollimator mit daran angeordneter Kippeinrichtung und Zentriereinrichtung.

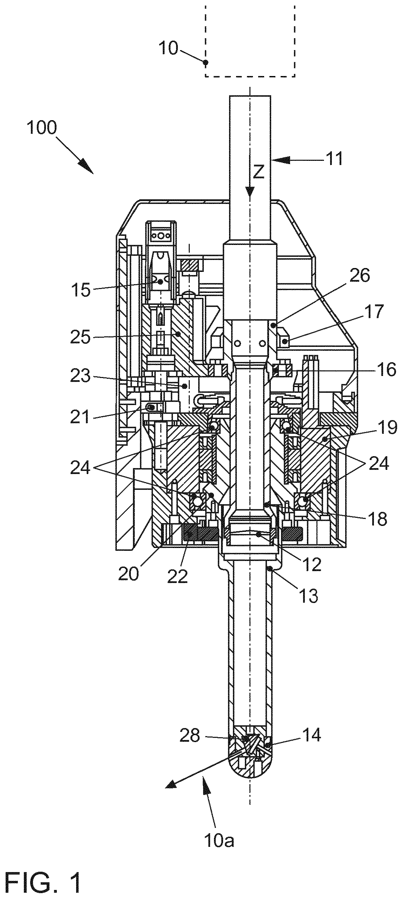

Figur 1 zeigt das Laserwerkzeug (100) in einer Querschnittdarstellung. Die Faser der Laserquelle (10) wird über den Kollimator (11) mit dem Laserwerkzeug (100) verbunden. Der Kollimator (11) ist an einer feststehenden Hülse (26) befestigt, welche über einen Verstellwinkel (25) mit dem Antrieb (15) verbunden ist. Der Antrieb (15) verfährt entlang einer Führungswelle (23) mittels einer Kugelumlaufspindel (21). An der Hülse (26) ist ebenfalls ein Linsenrohr (18) befestigt, an dessen einen Ende, welches der Hülse (26) abgewandt ist, die Linse (12) befestigt ist. Der Strahlenverlauf des Laserstrahls (10a) aus der Laserquelle (10) erstreckt sich dabei durch den Kollimator (11), die Hülse (26), das Linsenrohr (18) und die Linse (12) hin zu einer optischen Vorrichtung (14).

Die Einheit bestehend aus Laserquelle (10), Kollimator (11), Hülse (26), Linsenrohr (18) und Linse (12) ist über den Verstellwinkel (25) mit dem Antrieb (15) verbunden und lässt sich so als Einheit parallel zum Laserstrahl bewegen. Die Bewegung dieser Fokussiereinheit wird begrenzt durch einen oberen Anschlag (17) und einen unteren Anschlag (16).

Das Laserwerkzeug (100) weist zudem eine in der Zeichnung nicht näher dargestellte Steuervorrichtung zur Steuerung der Bewegung des Kollimators (11) auf. Zur Steuerung der Bewegung des Kollimators (11) sind ein oder mehrere Parameter vorgebbar, so kann beispielsweise der Vorschub des Kollimators (11) in Richtung der optischen Vorrichtung (14) oder der Vorschub des Kollimators (11) in Richtung der Laserquelle (10) vorgegeben werden. Zudem weist das Laserwerkzeug (100) eine nicht näher dargestellte Regelungseinheit auf, welche die Bewegung des Kollimators (11) und damit die Fokuslage in Abhängigkeit in einem Signal, welches beispielsweise von einem Sensor stammt, im Prozess regelt und das System bezüglich der Fokuslage kalibriert.

Zur Rotation des Laserstrahls weist das Laserwerkzeug (100) eine Spindel (13) auf, welche an der Hohlwelle (20) eines Hohlwellenmotors (19) befestigt ist, und durch diesen Hohlwellenmotor (19) angetrieben wird. Dabei sind das Linsenrohr (18) und die Linse (12) innerhalb der Hohlwelle (20) angeordnet. Alle Komponenten des Hohlwellenmotors (19) sind über Lager (24) gelagert.

An dem Ende der Spindel (13), welches dem Hohlwellenmotor (19) abgewandt ist, ist die optische Vorrichtung (14) befestigt. Die optische Vorrichtung (14) rotiert zusammen mit der Spindel (13). Die optische Vorrichtung (14) umfasst ein Umlenkprima (28) oder einen Spiegel, welches den Laserstrahl (10a) auf die Werkstückoberfläche (30) umlenkt. Im Bereich der Spindel ist darüber hinaus ein Geber (22) mit Lesekopf angeordnet, welcher die Position der Spindel, und damit des Laserstrahls (10a), überprüft.

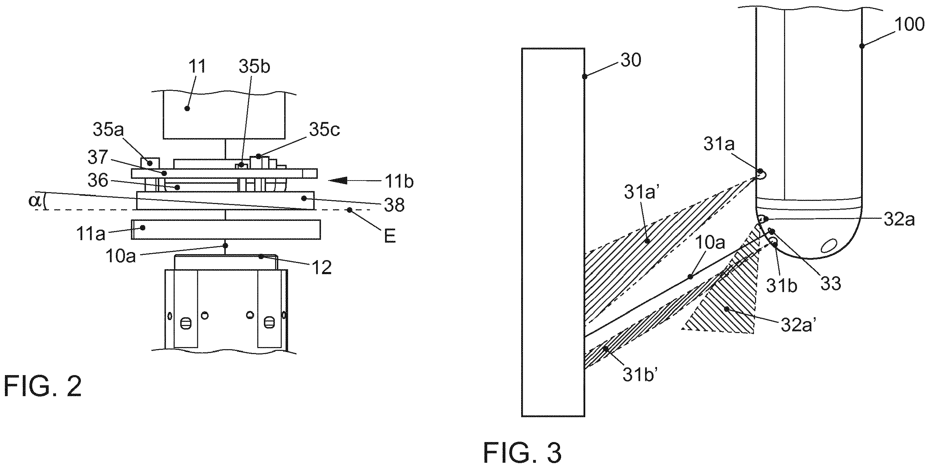

Figur 2 zeigt die Kippeinrichtung (11b) und die Zentriereinrichtung (11a), welche zwischen dem Kollimator (11) und der *Hülse (26)* angeordnet sind, in einer Explosionsdarstellung. Entlang der Ausbreitungsrichtung des Laserstrahls (10a) ist die Kippeinrichtung (11b) hinter dem Kollimator (11) und vor der Zentriereinrichtung (11a) angeordnet. Die Zentriereinrichtung (11a) ist hinter der Kippeinrichtung (11b) angeordnet und beispielsweise mittels Schrauben an der Linse (12) befestigt. Mittels der Kippeinrichtung (11b) ist der Kollimator (11) aus einer Schräglage zum Laserstrahl (10a) um den Winkel α in eine Ebene (E) senkrecht zum Laserstrahl (10a) kippbar. Die Verkippung des Laserstrahls (10a) wird durch Anziehen und Lösen der Kippschrauben (35a, 35b, 35c) erreicht.

Die Kippeinrichtung (11b) weist ein halbkugelförmiges Element (36) auf, welches mit seiner flachen Seite am Kollimator (11) befestigt ist. An dem halbkugelförmigen Element (36) ist ein umlaufender ringförmiger Vorsprung (37) mit Durchgangsbohrungen angeordnet, wobei durch die Durchgangsbohrungen die Kippschrauben (35a, 35b, 35c) geführt sind. Die Kippschrauben (35a, 35b, 35c) werden in ein ringförmiges Auflageteil (38) verschraubt, wobei in der zentralen Öffnung des ringförmigen Auflageteils (38) das halbkugelförmige Element (36) derart gelagert ist, dass das halbkugelförmige Element (36) sich kugelgelenkartig bewegen kann. Die Kippeinrichtung (11b) wird vorzugsweise an der Zentriereinrichtung (11a) festgeschraubt.

Figur 3 zeigt das erste Düsensystem (31) und das zweite Düsensystem (32), welche nah der Laserstrahlaustrittsöffnung (33) des Laserwerkzeugs angeordnet sind. Das erste Düsensystem (31) umfasst wenigstens eine Luftdüse (31a), welche oberhalb der Laserstrahlaustrittsöffnung (33) angeordnet ist. Der aus der Luftdüse (31a) tretende Luftstrahl (31a`) ist kegelförmig ausgebildet und auf die Werkstückoberfläche (30) gerichtet, wobei der Luftstrahl (31a') etwa parallel zum Laserstrahl (10a) verläuft und diesen nicht schneidet.

Um das Eindringen von Partikeln in das Innere des Laserwerkzeugs durch die Laserstrahlaustrittsöffnung (33) zu verhindern, ist ein drittes Düsensystem vorgesehen, welches eine dritte Luftdüse (32a) umfasst, deren Luftstrahl (32a`) derart vor der Laserstrahleintrittsöffnung (33) angeordnet ist, dass sich ein Luftvorhang vor der Laserstrahlaustrittöffnung (33) bildet. Dazu kreuzt der dritte Luftstrahl (32a') den Laserstrahl (10a) in einem Bereich nah der Laserstrahlaustrittsöffnung (33). Dieses System eignet sich auch dazu, nach dem Bearbeitungsprozess die Öffnung des Lasers abzuschotten, um herumfliegende Partikel umzulenken oder davon abzuhalten, in das System einzudringen.

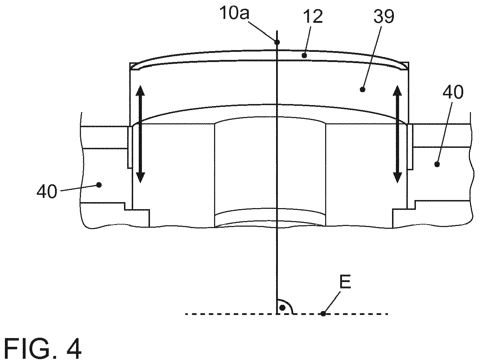

In Figur 4 ist die Schwingungserzeugungsvorrichtung (34), welche die Linse (12) in Schwingungen versetzt, in einer Querschnittsbetrachtung durch den Laserstrahl (10a) und senkrecht zur X-Y-Ebene (E) dargestellt. Mittels einer stromdurchflossenen Spule (39), welche sich im Feld eines Magneten (35) bewegt, kann die an der Spule (39) angeordnete Linse (12) in Schwingung versetzt werden. Die Schwingung erfolgt wie mittels der Pfeile angedeutet in Z-Richtung parallel zum Laserstrahl, wodurch eine Lageveränderung des Fokus relativ zur Werkstückoberfläche derart möglich ist, dass feine Strukturen in die Werkstückoberfläche eingearbeitet werden können.

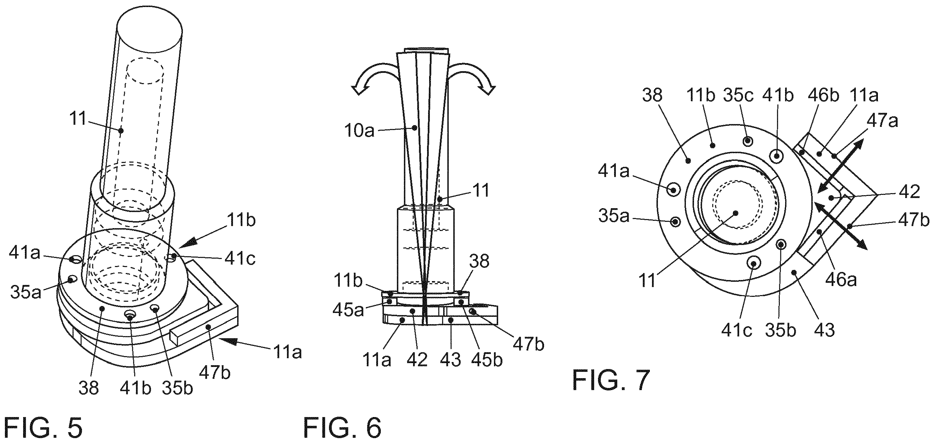

Figur 5 zeigt den Kollimator (11) mit der Kippeinrichtung (11b), welche an dem der Laserquelle (10) abgewandten Ende des Kollimators (11) angeordnet ist. Die Kippeinrichtung (11b) ist mittels dreier Verbindungsschrauben (41a, 41b, 41c), welche durch Bohrungen im ringförmigen Auflageteil (38) geführt werden und vorzugsweise als Konterschrauben ausgeführt sind, an der Zentriereinrichtung (11a) befestigt, sodass die Kippeinrichtung (11b) zwischen dem Kollimator (11) und der Zentriereinrichtung (11a) angeordnet ist. Drei weitere Schrauben, welche durch Bohrungen im ringförmigen Auflageteil (38) in der Kippeinrichtung (11b) geführt werden, dienen als Kippschrauben (35a, 35b, 35c). Durch Lösen und Anziehen der Kippschrauben (35a, 35b, 35c) kann die Lage des Kollimators (11) und damit des Laserstrahls (10a) relativ zur Ebene (E) verändert werden.

In Figur 6 ist die Einheit bestehend aus Kollimator (11), Zentriereinrichtung (11a) und Kippeinrichtung (11b) in einer Seitenansicht gezeigt. Zwischen dem ringförmigen Auflageteil (38) der Kippeinrichtung (11b) und einem ersten Verschiebeteil (42) der Zentriereinrichtung (42), welches mit dem Kollimator (11b) mittels der Verbindungsschrauben (41a, 41b, 41c) verbunden ist, ist wenigstens ein erstes Distanzstück (45a, 45b, 45c) angeordnet. Mittels des wenigstens einen ersten Distanzstücks (45a, 45b, 45c) kann ein genau definiertes und reproduzierbaren Einstellen des Kollimators (11) mit hoher Wiederholgenauigkeit erfolgen. Durch Kippen des Kollimators (11) ist der Laserstrahl (10a) in die durch die Pfeile angedeuteten Richtungen verstellbar.

Figur 7 zeigt die Zentriereinrichtung (11a), die Kippeinrichtung (11b) und den Kollimator (11) in einer Draufsicht, wobei der Kollimator (11) in einer Querschnittbetrachtung durch den Kollimator (11) gezeigt ist. Die Justierung des Kollimators (11) bzw. des Laserstrahls (10a) wird durch Verschiebung des ersten und zweiten Verschiebeteils (42, 43) der Zentriereinrichtung relativ zueinander erreicht. Dazu sind zwei Zentrierschrauben (47a, 47b) vorgesehen, welche durch Bohrungen in einen Vorsprung in dem zweiten Verschiebeteil (43) geführt werden und durch Anziehen das zweite Verschiebeteil (43) relativ zu dem ersten Verschiebeteil (42), an welchem der Kollimator (11) über die Kippeinrichtung (11b) verbunden ist, verschoben wird. Mittels der Zentrierschrauben wird somit eine durch die Pfeile angedeutete Bewegung des Kollimators in x-bzw. y-Richtung erreicht. Ebenso kann hier wenigstens ein zweites Distanzstück (46a, 46b) zwischen dem ersten Verschiebeteil (42) und dem zweiten Verschiebeteil (43) angeordnet werden, um eine Verschiebung um einen definierten Abstand zu ermöglichen.

### Bezugszeichenliste

| | | | |
|---|---|---|---|
| 100 | Laserwerkzeug | 31 | erstes Düsensystem |
| 10 | Laserquelle | 31a | erste Luftdüse |
| 10a | Laserstrahl | 31a' | erster Luftstrahl |
| 11 | Kollimator | 31b | zweite Luftdüse |
| 11b | Kippeinrichtung | 31 b` | zweiter Luftstrahl |
| 11a | Zentriereinrichtung | 32 | zweites Düsensystem |
| 12 | Linse | 32a | dritte Luftdüse |
| 13 | Spindel | 32a' | dritter Luftstrahl |
| 14 | optische Vorrichtung | 33 | Laserstrahlaustrittsöffnung |
| 15 | Antrieb | 35a, 35b, 35c | Kippschrauben |
| 16 | unterer Anschlag | 36 | halbkugelförmiges Element |
| 17 | oberer Anschlag | 37 | ringförmiger Vorsprung |
| 18 | Linsenrohr | 38 | ringförmiges Auflageteil |
| 19 | Hohlwellenmotor | 39 | Spule |
| 20 | Hohlwelle | 40 | Magnet |
| 21 | Kugelumlaufspindel | 41a, 41b, 41c | Verbindungsschrauben |
| 22 | Geber | 42 | erstes Verschiebeteil |
| 23 | Führungswelle | 43 | zweites Verschiebeteil |
| 24 | Lager | 45a, 45b, 45c | erstes Distanzstück |
| 25 | Verstellwinkel | 46a, 46b | zweites Distanzstück |
| 26 | Hülse | 47a, 47b | Zentrierschrauben |
| 28 | Umlenkprisma/ Spiegel | α | Winkel |
| 30 | Werkstückoberfläche | E | X-Y-Ebene |

## Patentansprüche

1. Laserwerkzeug (100), insbesondere für die Strukturierung von Zylinderlaufflächen, aufweisend eine Laserquelle (10) zur Erzeugung von Laserstrahlen (10a), aufweisend einen Kollimator (11) zur Erzeugung eines parallelen Verlaufs des Laserstrahlen (10a) aus der Laserquelle (10), welche durch eine Linse (12) geführt werden, welche innerhalb einer rotierbaren Spindel (13) angeordnet ist, wobei an einem der Laserquelle (10) abgewandten Ende der Spindel (13) eine optische Vorrichtung (14) zur Umlenkung der Laserstrahlen (10a) auf eine Werkstoffoberfläche befestigt ist,
**dadurch gekennzeichnet, dass**
der Kollimator (11) mittels eines Antriebs (15) parallel zum Laserstrahl (10a) bewegbar ist und dass das Laserwerkzeug (100) eine Zentriereinrichtung (11a) zur Verschiebung des Kollimators (11) in einer Ebene senkrecht zum Laserstrahl (10a) aufweist, wobei das Laserwerkzeug (100) eine Kippeinrichtung (11b) aufweist, mittels derer der Kollimator (11) von mindestens einer Ebene, welche einen Winkel (α) mit der X-Y-Ebene einschließt, in eine Ebene (E) senkrecht zum Laserstrahl kippbar ist, wobei die Kippeinrichtung (11b) zwischen der der optischen Vorrichtung (14) zugewandten Seite des Kollimators (11) und der Zentriereinrichtung (11a) angeordnet ist.

2. Laserwerkzeug (100) nach Anspruch 1, **dadurch gekennzeichnet, dass** der Antrieb (15) eine elektrischer Antrieb, insbesondere ein Stellmotor, ein pneumatischer Antrieb oder ein hydraulischer Antrieb ist.

3. Laserwerkzeug (100) nach einem der vorhergehenden Ansprüche, **dadurch gekennzeichnet, dass** der Antrieb (15) einen externen Positionsgeber aufweist.

4. Laserwerkzeug (100) nach einem der vorhergehenden Ansprüche, **dadurch gekennzeichnet, dass** der Antrieb (15) eine Steuervorrichtung zur Steuerung der Bewegung des Kollimators (11) anhand mindestens einem vorgebbaren Parameter aufweist.

5. Laserwerkzeug (100) nach einem der vorhergehenden Ansprüche, **dadurch gekennzeichnet, dass** der mindestens eine Parameter der Vorschub des Kollimators (11) in Richtung des optische Vorrichtung (14) oder der Vorschub des Kollimators in Richtung der Laserquelle (10) ist.

6. Laserwerkzeug nach einem der vorhergehenden Ansprüche, **dadurch gekennzeichnet, dass** das Laserwerkzeug mindestens einen unteren Anschlag und/oder einen oberen Anschlag aufweist, welche die Bewegung des Kollimators begrenzen.

7. Laserwerkzeug nach einem der vorhergehenden Ansprüche, **dadurch gekennzeichnet, dass** die Linse (12) feststehend in einem Linsenrohr (18) angeordnet ist.

8. Laserwerkzeug (100) nach Anspruch 7, **dadurch gekennzeichnet, dass** die Linse (12) an dem Linsenrohr (18) befestigt ist und dass das Linsenrohr (18) am Kollimator (11) befestigt ist.

9. Laserwerkzeug (100) nach einem der vorhergehenden Ansprüche, **dadurch gekennzeichnet, dass** die Spindel (13) mittels eines Hohlwellenmotors (19) rotiert wird, wobei die Spindel (13) am Rotor (20) des Hohlwellenmotors befestigt ist.

10. Laserwerkzeug (100) nach einem der vorhergehenden Ansprüche, **dadurch gekennzeichnet, dass** die optische Vorrichtung (14) ein Umlenkprisma oder einen Spiegel (28) umfasst.

11. Laserwerkzeug (100) nach einem der vorhergehenden Ansprüche, **dadurch gekennzeichnet, dass** das Laserwerkzeug (100) eine Regelungseinheit aufweist, welche die Bewegung des Kollimators (11) in Abhängigkeit von einem Signal eines Sensors regelt.

12. Laserwerkzeug (100) nach einem der vorhergehenden Ansprüche, **dadurch gekennzeichnet, dass** das Laserwerkzeug ein erstes Düsensystem (31) aufweist, wobei das erste Düsensystem (31) wenigstens eine Luftdüse (31a), insbesondere wenigstens zwei Luftdüsen (31a, 31b), aufweist, welche den aus dem Laserwerkzeug (100) ausgetretenen Laserstrahl (10a) derart mit einem Luftstrahl (31a', 31b') umgeben, dass mittels des Laserstrahls (10a) von der Werkstückoberfläche (30) abgetragene Werkstückpartikel entschleunigt werden und/oder dass der wenigstens eine Luftstrahl (31a') der wenigstens einen Luftdüse (31a) auf die Werkstoffoberfläche (30) gerichtet ist, um die Werkstoffoberfläche (30) zu reinigen.

13. Laserwerkzeug (100) nach einem der vorhergehenden Ansprüche, **dadurch gekennzeichnet, dass** das Laserwerkzeug ein zweites Düsensystem (32) aufweist, wobei das zweite Düsensystem (32) wenigstens eine dritte Luftdüse (32a) aufweist, dessen Luftstrahl (32a') den Laserstrahl derart vor einer Laserstrahlaustrittsöffnung (33) des Laserwerkzeugs (100) verläuft, dass ein Eindringen von Partikeln in das Innere des Laserwerkzeugs (100) durch die Laserstrahlaustrittsöffnung (33) verhindert wird.

14. Laserwerkzeug (100) nach einem der vorhergehenden Ansprüche, **dadurch gekennzeichnet, dass** das Laserwerkzeug (100) eine Schwingungserzeugungseinrichtung (34) aufweist, mittels welcher die Linse (12) in eine Schwingung parallel zum Laserstrahl versetzbar ist, wobei die Schwingungsfrequenz in Abhängigkeit von der Umlaufgeschwindigkeit der Spindel (13) steuerbar ist.

15. Laserwerkzeug (100) nach Anspruch 14, **dadurch gekennzeichnet, dass** die Schwingungserzeugungseinrichtung (34) ein mittels eines hochfrequenten Motors angetriebener Exzenter oder ein System umfassend eine Spule (39) und ein Magnet (40) ist.

16. Verfahren zur Einstellung der Fokuslage von Laserstrahlen in einem Laserwerkzeug (100), aufweisend eine Laserquelle (10) zur Erzeugung der Laserstrahlen (10a) und einen Kollimator (11) zur Erzeugung eines parallelen Verlaufs der Laserstrahlen (10a) aus der Laserquelle (10), welche durch eine Linse (12) geführt werden, wobei die Linse (12) innerhalb einer rotierbaren Spindel (13) angeordnet ist, wobei an einem der Laserquelle (10) abgewandten Ende der Spindel (13) eine optische Vorrichtung (14) zur Umlenkung der Laserstrahlen (10a) auf eine Werkstoffoberfläche befestigt ist und der Kollimator (11) mittels eines Antriebs parallel zum Laserstrahl (10a) bewegbar ist, wobei mittels einer Steuerung, welche die Bewegung des Kollimators (11) steuert, mindestens ein Parameter vorgegeben wird,
**dadurch gekennzeichnet, dass** in Abhängigkeit von dem mindestens einen Parameter der Kollimator (11) in Richtung der optischen Vorrichtung (14) oder entgegen der Richtung der optischen Vorrichtung (14) bewegt wird und dass das Laserwerkzeug (100) eine Zentriereinrichtung (11a) zur Verschiebung des Kollimators (11) in einer Ebene senkrecht zum Laserstrahl (10a) aufweist, wobei das Laserwerkzeug (100) eine Kippeinrichtung (11b) aufweist, mittels derer der Kollimator (11) von mindestens einer Ebene, welche einen Winkel (α) mit der X-Y-Ebene einschließt, in eine Ebene (E) senkrecht zum Laserstrahl kippbar ist, wobei die Kippeinrichtung (11b) zwischen der der optischen Vorrichtung (14) zugewandten Seite des Kollimators (11) und der Zentriereinrichtung (11a) angeordnet ist.

17. Verfahren nach Anspruch 16, wobei der der mindestens eine Parameter der Vorschub des Kollimators (11) in Richtung der optischen Vorrichtung (14) oder der Vorschub des Kollimators (11) in Richtung der Laserquelle (10) ist.

18. Verfahren nach Anspruch 17, wobei die Linse (12) feststehend in einem Linsenrohr (18) angeordnet ist, welches am Kollimator (11) befestigt ist, sodass die Linse (12) der Bewegung des Kollimators (11) folgt.

## Claims

1. Laser tool (100), in particular for the structuring of cylinder barrels, having a laser source (10) for generating laser beams (10a), having a collimator (11) for generating a parallel profile of the laser beams (10a) from the laser source (10) which are guided through a lens (12) which is arranged within a rotatable spindle (13), wherein an optical apparatus (14) for deflecting the laser beams (10a) onto a material surface is fastened at an end of the spindle (13), said end facing away from the laser source (10),
**characterized in that**
the collimator (11) is movable parallel to the laser beam (10a) by means of a drive (15), and **in that** the laser tool (100) has a centring device (11a) for displacing the collimator (11) in a plane perpendicular to the laser beam (10a), wherein the laser tool (100) has a tilting device (11b) by means of which the collimator (11) is tiltable from at least one plane which encloses an angle (α) with the X-Y plane into a plane (E) perpendicular to the laser beam, wherein the tilting device (11b) is arranged between that side of the collimator (11) which faces towards the optical apparatus (14) and the centring device (11a).

2. Laser tool (100) according to Claim 1, **characterized in that** the drive (15) is an electrical drive, in particular an actuating motor, a pneumatic drive or a hydraulic drive.

3. Laser tool (100) according to either of the preceding claims, **characterized in that** the drive (15) has an external position sensor.

4. Laser tool (100) according to one of the preceding claims, **characterized in that** the drive (15) has a control apparatus for controlling the movement of the collimator (11) on the basis of at least one predefinable parameter.

5. Laser tool (100) according to one of the preceding claims, **characterized in that** the at least one parameter is the feed movement of the collimator (11) in the direction of the optical apparatus (14) or the feed movement of the collimator in the direction of the laser source (10).

6. Laser tool according to one of the preceding claims, **characterized in that** the laser tool has at least one lower stop and/or one upper stop, which limit the movement of the collimator.

7. Laser tool according to one of the preceding claims, **characterized in that** the lens (12) is arranged in a lens tube (18) in a fixed manner.

8. Laser tool (100) according to Claim 7, **characterized in that** the lens (12) is fastened to the lens tube (18), and **in that** the lens tube (18) is fastened to the collimator (11).

9. Laser tool (100) according to one of the preceding claims, **characterized in that** the spindle (13) is rotated by means of a hollow-shaft motor (19), wherein the spindle (13) is fastened to the rotor (20) of the hollow-shaft motor.

10. Laser tool (100) according to one of the preceding claims, **characterized in that** the optical apparatus (14) comprises a deflection prism or a mirror (28).

11. Laser tool (100) according to one of the preceding claims, **characterized in that** the laser tool (100) has a closed-loop control unit which performs closed-loop control of the movement of the collimator (11) in dependence on a signal of a sensor.

12. Laser tool (100) according to one of the preceding claims, **characterized in that** the laser tool has a first nozzle system (31), wherein the first nozzle system (31) has at least one air nozzle (31a), in particular at least two air nozzles (31a, 31b), which surround the laser beam (10a) emitted from the laser tool (100) with an air jet (31a', 31b') in such a way that workpiece particles removed from the workpiece surface (30) by means of the laser beam (10a) are decelerated and/or that the at least one air jet (31a') of the at least one air nozzle (31a) is directed onto the material surface (30) in order to clean the material surface (30).

13. Laser tool (100) according to one of the preceding claims, **characterized in that** the laser tool has a second nozzle system (32), wherein the second nozzle system (32) has at least a third air nozzle (32a), the air jet (32a') of which passes the laser beam in front of a laser beam outlet opening (33) in the laser tool (100) in such a way that ingress of particles into the interior of the laser tool (100) through the laser beam outlet opening (33) is prevented.

14. Laser tool (100) according to one of the preceding claims, **characterized in that** the laser tool (100) has an oscillation generating device (34) by means of which the lens (12) is settable in oscillation parallel to the laser beam, wherein the oscillation frequency is controllable in dependence on the circumferential speed of the spindle (13).

15. Laser tool (100) according to Claim 14, **characterized in that** the oscillation generating device (34) is an eccentric which is driven by means of a high-frequency motor, or a system comprising a coil (39) and a magnet (40).

16. Method for adjusting the focal position of laser beams in a laser tool (100), having a laser source (10) for generating the laser beams (10a) and a collimator (11) for generating a parallel profile of the laser beams (10a) from the laser source (10) which are guided through a lens (12), wherein the lens (12) is arranged within a rotatable spindle (13), wherein an optical apparatus (14) for deflecting the laser beams (10a) onto a material surface is fastened at an end of the spindle (13), said end facing away from the laser source (10), and the collimator (11) is movable parallel to the laser beam (10a) by means of a drive, wherein at least one parameter is predefined by means of a controller which controls the movement of the collimator (11), **characterized in that**, in dependence on the at least one parameter, the collimator (11) is moved in the direction of the optical apparatus (14) or counter to the direction of the optical apparatus (14), and **in that** the laser tool (100) has a centring device (11a) for displacing the collimator (11) in a plane perpendicular to the laser beam (10a), wherein the laser tool (100) has a tilting device (11b) by means of which the collimator (11) is tiltable from at least one plane which encloses an angle (α) with the X-Y plane into a plane (E) perpendicular to the laser beam, wherein the tilting device (11b) is arranged between that side of the collimator (11) which faces towards the optical apparatus (14) and the centring device (11a).

17. Method according to Claim 16, wherein the at least one parameter is the feed movement of the collimator (11) in the direction of the optical apparatus (14) or the feed movement of the collimator (11) in the direction of the laser source (10).

18. Method according to Claim 17, wherein the lens (12) is arranged in a lens tube (18) in a fixed manner, said lens tube being fastened to the collimator (11) such that the lens (12) follows the movement of the collimator (11).

## Revendications

1. Outil laser (100), en particulier pour la structuration de surfaces de glissement de cylindres, présentant une source laser (10) pour générer des faisceaux lasers (10a), comprenant un collimateur (11) pour générer une trajectoire parallèle des faisceaux laser (10a) provenant de la source laser (10), qui sont guidés par une lentille (12), laquelle est placée à l'intérieur d'une broche rotative (13), un dispositif optique (14) pour dévier les faisceaux laser (10a) sur une surface de matériau étant fixé à une extrémité de la broche (13) opposée à la source laser (10),
**caractérisé en ce que**
le collimateur (11) est apte à être déplacé parallèlement au faisceau laser (10a) au moyen d'un entraînement (15) et **en ce que** l'outil laser (100) présente un dispositif de centrage (11a) pour déplacer le collimateur (11) dans un plan perpendiculaire au faisceau laser (10a), l'outil laser (100) présentant un dispositif d'inclinaison (11b) au moyen duquel le collimateur (11) est apte à être incliné depuis au moins un plan qui forme un angle (α) avec le plan X-Y jusque dans un plan (E) perpendiculaire au faisceau laser, le dispositif d'inclinaison (11b) étant agencé entre le côté du collimateur (11) tourné vers le dispositif optique (14) et le dispositif de centrage (11a).

2. Outil laser (100) selon la revendication 1, **caractérisé en ce que** l'entraînement (15) est un entraînement électrique, notamment un servomoteur, un entraînement pneumatique ou un entraînement hydraulique.

3. Outil laser (100) selon l'une des revendications précédentes, **caractérisé en ce que** l'entraînement (15) comprend un capteur de position externe.

4. Outil laser (100) selon l'une des revendications précédentes, **caractérisé en ce que** l'entraînement (15) comporte un dispositif de commande pour commander le mouvement du collimateur (11) en utilisant au moins un paramètre apte à être prédéfini.

5. Outil laser (100) selon l'une des revendications précédentes, **caractérisé en ce que** ledit au moins un paramètre est l'avance du collimateur (11) en direction du dispositif optique (14) ou l'avance du collimateur en direction de la source laser (10).

6. Outil laser selon l'une des revendications précédentes, **caractérisé en ce que** l'outil laser comprend au moins une butée inférieure et/ou une butée supérieure qui délimitent le mouvement du collimateur.

7. Outil laser selon l'une des revendications précédentes, **caractérisé en ce que** la lentille (12) est agencée de manière fixe dans un tube de lentille (18).

8. Outil laser (100) selon la revendication 7, **caractérisé en ce que** la lentille (12) est fixée au tube de lentille (18) et **en ce que** le tube de lentille (18) est fixé au collimateur (11).

9. Outil laser (100) selon l'une des revendications précédentes, **caractérisé en ce que** la broche (13) est mise en rotation par un moteur (19) à arbre creux, la broche (13) étant fixée au rotor (20) du moteur à arbre creux.

10. Outil laser (100) selon l'une des revendications précédentes, **caractérisé en ce que** le dispositif optique (14) comprend un prisme de déviation ou un miroir (28).

11. Outil laser (100) selon l'une des revendications précédentes, **caractérisé en ce que** l'outil laser (100) comporte une unité de commande qui commande le mouvement du collimateur (11) en fonction d'un signal d'un capteur.

12. Outil laser (100) selon l'une des revendications précédentes, **caractérisé en ce que** l'outil laser présente un premier système de buses (31), le premier système de buses (31) présentant au moins une buse à air (31a), en particulier au moins deux buses à air (31a, 31b), qui entourent le faisceau laser (10a) sortant de l'outil laser (100) d'un jet d'air (31a', 31b') de telle sorte que des particules de la pièce à travailler enlevées de la surface (30) de la pièce à travailler au moyen du faisceau laser (10a) sont décélérées et/ou que l'au moins un jet d'air (31a') de la au moins une buse à air (31a) est dirigé sur la surface (30) du matériau afin de nettoyer la surface (30) du matériau.

13. Outil laser (100) selon l'une des revendications précédentes, **caractérisé en ce que** l'outil laser comporte un deuxième système de buses (32), le deuxième système de buses (32) comportant au moins une troisième buse à air (32a), dont le jet d'air (32a') passe devant une ouverture (33) de sortie de faisceau laser de l'outil laser (100) de manière à empêcher les particules de pénétrer à l'intérieur de l'outil laser (100) à travers l'ouverture (33) de sortie du faisceau laser.

14. Outil laser (100) selon l'une des revendications précédentes, **caractérisé en ce que** l'outil laser (100) présente un dispositif (34) générateur d'oscillations au moyen duquel la lentille (12) est apte à être mise en oscillation parallèlement au faisceau laser, la fréquence d'oscillation étant apte à être commandée en fonction de la vitesse de rotation de la broche (13).

15. Outil laser (100) selon la revendication 14, **caractérisé en ce que** le dispositif (34) de génération d'oscillations est un excentrique entraîné par un moteur à haute fréquence ou un système comprenant une bobine (39) et un aimant (40).

16. Procédé de réglage de la position focale de faisceaux laser dans un outil laser (100), comprenant une source laser (10) pour générer les faisceaux laser (10a) et un collimateur (11) pour générer une trajectoire parallèle des faisceaux laser (10a) provenant de la source laser (10), lesquels sont guidés par une lentille (12), la lentille (12) étant agencée à l'intérieur d'une broche rotative (13), un dispositif optique (14) destiné à dévier les faisceaux laser (10a) sur une surface de matériau étant fixé à une extrémité de la broche (13) opposée à la source laser (10), et le collimateur (11) étant apte à être déplacé parallèlement au rayon laser (10a) au moyen d'un entraînement, au moins un paramètre étant prédéfini au moyen d'une commande qui commande le mouvement du collimateur (11),
**caractérisé en ce que**, en fonction dudit au moins un paramètre, le collimateur (11) est déplacé en direction du dispositif optique (14) ou en sens inverse de la direction allant vers le dispositif optique (14), et **en ce que** l'outil laser (100) comprend un dispositif de centrage (11a) pour déplacer le collimateur (11) dans un plan perpendiculaire au faisceau laser (10a), l'outil laser (100) présentant un dispositif d'inclinaison (11b) au moyen duquel le collimateur (11) est apte à être incliné depuis au moins un plan qui forme un angle (α) avec le plan X-Y, jusque dans un plan (E) perpendiculaire au faisceau laser, le dispositif d'inclinaison (11b) étant disposé entre le côté du collimateur (11) tourné vers le dispositif optique (14) et le dispositif de centrage (11a).

17. Procédé selon la revendication 16, dans lequel le au moins un paramètre est l'avance du collimateur (11) en direction du dispositif optique (14) ou l'avance du collimateur (11) en direction de la source laser (10).

18. Procédé selon la revendication 17, dans lequel la lentille (12) est agencée de manière fixe dans un tube de lentille (18) qui est fixé au collimateur (11), de sorte que la lentille (12) suit le mouvement du collimateur (11).
